Europäisches Patentamt

**European Patent Office**

**Office européen des brevets**

(11) Publication number: **0 095 043**

**A1**

(12) # EUROPEAN PATENT APPLICATION

(21) Application number: **83103992.0**

(22) Date of filing: **23.04.83**

(51) Int. Cl.³: **G 02 B 5/16**

(30) Priority: **26.05.82 US 382331**

(43) Date of publication of application:
**30.11.83 Bulletin 83/48**

(84) Designated Contracting States:
**BE DE FR GB IT**

(71) Applicant: **VANZETTI SYSTEMS, INC.**
**111 Island Street**
**Stoughton Massachusetts 02072(US)**

(72) Inventor: **Dostoomian, Ashod S.**
**31 Davis Road**
**Stoughton Massachusetts(US)**

(72) Inventor: **Traub, Alan C.**
**56 Donna Road**
**Framingham Massachusetts(US)**

(72) Inventor: **Davis, Jeffrey R.**
**38 Meredith Way**
**Weymouth Massachusetts(US)**

(74) Representative: **Quinterno, Giuseppe et al,**
**c/o Jacobacci-Casetta & Perani S.p.A. Via Alfieri, 17**
**I-10121 Torino(IT)**

(54) Fiber optic assembly for laser radiation.

(57) The optical fiber assembly for conveying laser radiation is comprised of a glass rod (14) having an input end and an output end for transmitting laser radiation. First optical fibers extend parallel to and surround the glass rod (14) with the input ends thereof coincident with the input end of the glass rod (14). The first optical fibers (18) are diverted from the glass rod (14) to define a first branch having an output end. A plurality of second optical fibers (34) and a plurality of third optical (36) fibers are disposed parallel to and extend about the glass rod adjacent the output end (32) thereof. The second optical fibers (34) have an output end coincident with the output end of the glass rod with the opposite ends of the second fibers diverting from the glass rod to define a second branch (46) having an input end (52). The third optical fibers (36) have input ends coincident with the output (32) end of the glass rod and are diverted from the optical means to define a third branch (50) having an output end (54).

./...

FIG 1

## FIBER OPTIC ASSEMBLY FOR LASER RADIATION

### BACKGROUND OF THE INVENTION

#### Field of the Invention

The present invention is directed to a fiber optic assembly for laser radiation and more specifically to a fiber optic assembly having a decentering monitor associated with the input and a back-illumination arrangement and a reflection monitor associated with the output end.

#### Prior Art

U.S. Patent 3,674,452 is directed to a method of fabricating illuminated fiber optics. A bundle of light-conducting fibers is provided for transmitting an image from one end of the bundle to the other. A plurality of additional fibers are disposed with one end thereof disposed adjacent the ends of the fibers of the image transmitting bundle in any desired geometric relationship while the opposite ends are diverted to form a branched bundle of fibers separate from the image transmitting bundle for the purpose of providing illumination to the end of the image transmitting bundle. The light transmitting fibers may surround the image transmitting fibers in the form of an annular ring or any other desired geometric configuration.

U.S. Patent 3,953,730 is directed to an optical reading head having a first set of optical fibers for transmitting light from a suitable source to the object to be illuminated and a second set of fibers for conveying the re-emitted radiation to a suitable sensing device. The ends of the two sets of optical fibers are maintained in separate groupings disposed adjacent each other.

U.S. Patent 3,327,584 is directed to a fiber optic proximity probe wherein two or more groups of optical fibers are arranged with their ends disposed in a common plane with the optical fibers of the individual bundles either interspersed with each other, disposed concentrically with respect to each other or arranged in other desirable geometric patterns. Light is directed through one set of bundles and the light reflected from the object being examined is transmitted through the other bundles of optical fibers to suitable sensing devices.

U.S. Patent 3,709,612 is directed to an apparatus for simultaneously detecting light reflected from a color reflectant surface at two different wavelength ranges. Two bundles of optical fibers are intermeshed with each other at the end thereof adjacent the surface.

U.S. Patent 3,708,232 is directed to optical readout means for locating and positioning objects with respect to a laser beam reference. A plurality of fiber optic bundles extend from an input array to an output or readout array with the ends of the individual bundles having the same relative position in each of the input and readout arrays. A laser beam impinged on any one of the ends of the fiber optic bundles in the input array will cause the corresponding output or readout end of the same fiber optic bundle to glow brightly in the readout array. This notifies the observer of the readout array that a laser beam has impinged upon the input array and advises the viewer as to the relative position of the beam on the input array.

U.S. Patent 3,825,335 is directed to a variable color photographic lighting system for illuminating a scene to be photographed. The system features one or more fiber optic light mixing devices which receive light from a plurality of different colored light sources and effectively mix the light to form light of a composite color. By varying the intensity of the different colors of light the color of the composite light output may be varied such that it is compatible with particular photosensitive materials being used in the photographic process.

<h2 style="text-align:center">SUMMARY OF THE INVENTION</h2>

The present invention provides a new and improved optical fiber assembly for conveying laser radiation from a laser to a remote location and more specifically an arrangement for monitoring the centering of the laser beam on the input end of the optical fiber bundle and an arrangement at the output end for providing illumination of the target and for aligning the output end of the optical fiber bundle with the reflective target.

The present invention provides a new and improved optical fiber assembly comprised of a main bundle of optical fibers for conveying laser radiation from a laser to a remote location where it can be optically imaged or otherwise transferred onto a target. The main branch is provided with an input end and an output end for the laser radiation and a bifurcation at the input end provides for a second optical fiber bundle to be used as a decentering monitor together with one or more photo detectors. The input ends of the second branch are arrayed annularly in a ring surrounding the input end of the main branch so that if the laser beam is not centered on the main branch, the spill-over radiation into the monitoring branch can be used by means of a detector to indicate a centering error. If the input annulus is in turn divided into two or more segments with the fibers in each segment being brought to a seperate detector the direction of the centering error can be indicated. A trifurcation toward the output end provides for two additional optical fiber bundles one of which is a backup illumination bundle whose output end is coincident with the output end of the main branch. At the output end, the back illumination fibers may either form a ring around those of the main branch or they may be interspersed with the main branch fibers or arrayed in any other suitable manner. If light is injected into the input end of the back illumination branch, the output light can be focused onto the target coincidentally with the laser radiation thus serving to identify the target area either before the laser is fired or in the case that a laser emitting invisible radiation is being used. The second additional bundle at the trifurcation may be used as a reflection monitor with its input end coinciding with the output end of the main branch and its fiber ends may be suitably interspersed with or otherwise arrayed for use with the neighboring fiber ends. This branch can be used for the detection of reflecting targets against dark fields and reflected light emanating from the output end may be monitored visually or photoelectrically.

The foregoing and other objects, features and advantages of the invention will be apparent from the following more particular description of a preferred embodiment of the invention as illustrated in the accompanying drawings.

BRIEF DESCRIPTION OF THE DRAWINGS

Figure 1 is a perspective view, partially broken away of the optical fiber assembly according to the present invention.

Figure 2 is a sectional view taken along the line II-II of Figure 1.

Figure 3 is a sectional view taken along the line III-III of Figure 1.

DETAILED DESCRIPTION OF THE INVENTION

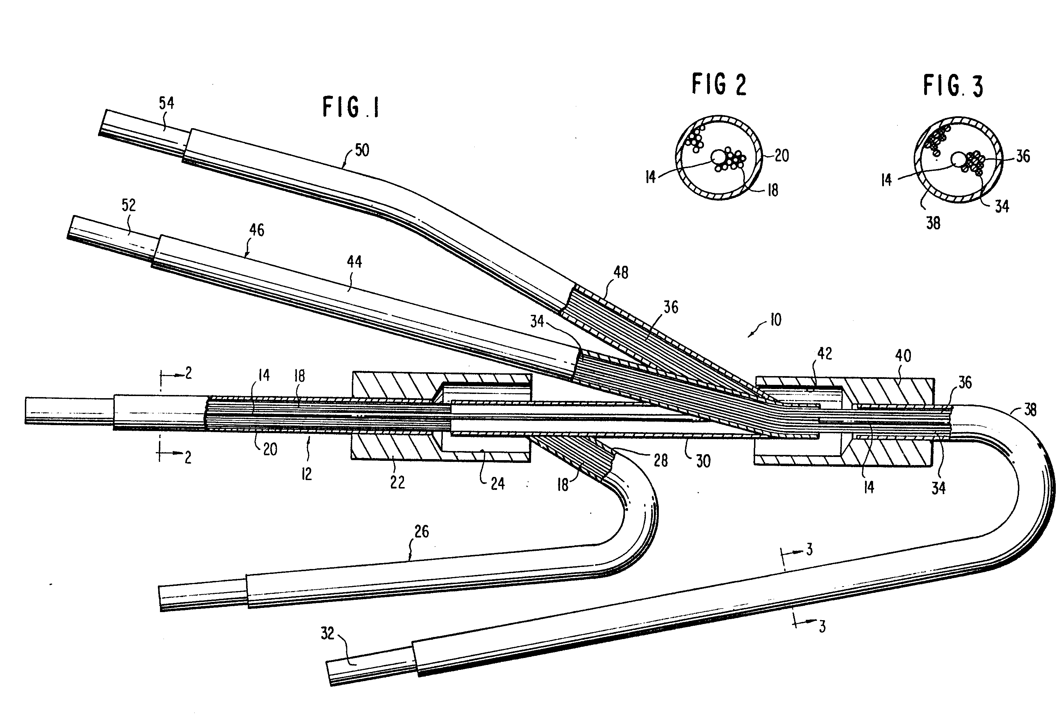

The optical fiber assembly 10 as illustrated in Figure 1 can be used for transmitting laser radiation from a laser source to a remote location where it can be optically imaged or otherwise transferred onto a target such as a solder joint in order to heat it. The main branch 12 consists primarily of a glass core 14 which extends from one end of the branch 12 to the other. At the input end 16, the core 14 is surrounded by an annular ring of optical fibers 18 which are covered by a suitable protective sheath 20. A fitting 22 is secured to the sheath 20 by any suitable means and at a point spaced from the input end 16 of the main branch. The fitting 22 is provided with a recess 24 at one end thereof which allows for the bifurcation of the main branch by diverting the fibers 18 into a second branch separate from the main branch. The second branch 26 which consists only of the fibers 18 is provided with a protective sheath 28 while the central core 14 is surrounded by a separate sheath 30. An airgap may be maintained between the core 14 and the sheath 30 or suitable filler means may be provided.

The opposite end 32 of the main branch 12 includes a plurality of optical fibers 34 and 36 which are interspersed with each other and extend in an annular ring about the core 14. The optical fibers 34 and 36 are surrounded by a protective sheath 38 to which a fitting 40 is secured in a point remote from the end 32. The fitting 40 is similar to the fitting 22 and is provided with a recess 42 at one end thereof which allows for the trifurcation of the main branch 12. The fibers 34 exit from the fitting as a separate bundle of fibers surrounded by a sheath 44 to define a third branch 46. Similarly, the optical fibers 36 exit from the fitting 40 to define a separate bundle of fibers surrounded by a separate sheath 48 to define a third branch 50. Although it appears that the glass core 14 is separated at the point where the optical fibers 34 and 36 mesh, this is not the case since the glass core 14 extends in a continuous unbroken length from the end 16 to the end 32 for transmitting laser radiation from a suitable laser source to a workpiece, neither of which is illustrated.

The annular arrangement of the optical fibers about the glass core adjacent the input end 16 is best seen in Figure 2 while the annular arrangement of the optical fibers 34 and 36 about the core 14 is best seen in Figure 3. The optical fibers 34 are identified by means of an "X" and the optical fibers 36 are identified by means of a "/". While the fibers 34 and 36 are randomly interspersed as seen in Figure 3 they could be arrayed in various other configurations such as concentric rings or the like.

In operation, the bifurcation of the main branch 12 adjacent the input end 16 provides for the second fiber bundle 26 which can be used as a decentering monitor together with one or more photodetectors (not shown). The input ends of the fibers 18 in the second branch are arrayed annularly in a ring surrounding the input end of the main branch so that if the laser beam is not centered on the glass core 14, the spill-over radiation into the monitoring branch can be used by means of the detector to indicate a centering error. If the input annulus of fibers 18 is in turn divided into two or more segments, with the fibers in each segment being brought to a separate detector, the direction of the centering error can be indicated.

The trifurcation spaced from the output end 32 of the main branch 12 provides for two additional branches 44 and 50. The branch 46 can act as a back illumination branch with the end 52 of the fiber bundle 34 being disposed adjacent a suitable light source (not shown). The output ends of the optical fibers 34 are coincident with the output end 32 of the main branch. The light injected into the end 52 of the back illumination branch 46 can be focused onto the target at the output end 32 coincidentally with the laser radiation thus serving to identify the target area either before the laser is fired or in the case that a laser emitting invisible radiation is being used.

The branch 50 may be used as a reflection monitor with the input end of the fibers 36 coinciding with the output end 32 of the main branch 12 and the ends of fiber 36 may be suitably interspersed with or otherwise arrayed for use with the neighboring fibers 34. This branch can be used for detecting the presence of reflecting targets such as solder joints against dark fields such as diffuse substrates. The reflective light emanating from the output end 54 may be monitored visually or photoelectrically.

While the invention has been particularly shown and described with reference to a preferred embodiment thereof, it will be understood by those in the art that the foregoing and other changes in form and details may be made therein without departing from the spirit and scope of the invention.

## CLAIMS

1.    An optical fiber assembly for conveying laser radiation comprising elongated optical means having an input end and an output end for transmitting laser radiation, first optical fibers extending parallel to and surrounding said optical means and having input ends coincident with the input end of said optical means, said first optical fibers being diverted from said optical means to define a first branch having an output end, a plurality of second optical fibers and a plurality of third optical fibers disposed parallel to and extending about said optical means adjacent the output end thereof, said second optical fibers having an output end coincident with the output ends of said optical means with the opposite ends of said second fibers diverting from said optical means to define a second branch having an input end and said third optical fibers having input ends coincident with the output end of said optical means and diverting from said optical means to define a third branch having an output end.

2.    An optical fiber assembly as set forth in Claim 1, wherein said optical means is comprised of a glass rod.

3.    An optical fiber assembly as set forth in Claim 2, wherein said first optical fibers surround said glass rod in an annular ring at the input end of said glass rod.

4.    An optical fiber assembly as set forth in Claim 2, wherein said second and third fibers are interspersed with each other in an annular ring surrounding said glass rod at the output end of said glass rod.

5.    An optical fiber assembly for transmitting laser radiation comprising optical means having an input end and an output end, said optical means being bifurcated adjacent said input end to define a first branch for determining the centering of laser radiation on said input end and said optical means being trifurcated adjacent the output end thereof to define second and third branches for conveying additional radiation to said output end and for conveying reflective radiation away from said output end respectively.

FIG 2

FIG. 3

FIG .1

54

50

52

46

44

48

36

34

10

42

40

36

20

14

18

38

2

14

18

34

2

20

12

22

24

18

28

30

14

34

26

3

32

3

14

20

18

36

38

14

34

38

1 / 1

0095043

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | DE-A-2 321 137 (MESSERSCHMIDT-BÖLKOW-BLOHM) * Page 5 * | 1,5 | G 02 B 5/16 |
| Y | US-A-3 749 924 (G. VISCHULIS) * Claims 1-3 * | 1 | |
| Y | GB-A-1 435 565 (SPERRY RAND CORP.) * Figure 1 * | 5 | |
| A | US-A-3 905 852 (K. MUKAI et al.) * Claim 1 * | 2 | |
| A | DE-A-2 626 243 (AEG-TELEFUNKEN KABELWERKE AG) * Page 14 * | 2 | |
| A | US-A-3 778 169 (L.D. ADAMS) * Figure 46 * | 3 | TECHNICAL FIELDS SEARCHED (Int. Cl. 3)<br><br>G 02 B 5/16 |
| A | DE-A-2 208 089 (COMTEURS SCHLUMBERGER) * Claims 1, 4 * | 1 | |

The present search report has been drawn up for all claims

| Place of search | Date of completion of the search | Examiner |
|---|---|---|
| BERLIN | 22-08-1983 | FUCHS R |